# EUROPÄISCHE PATENTSCHRIFT

(11) **EP 3 126 651 B1**
(45) Veröffentlichungstag und Bekanntmachung des Hinweises auf die Patenterteilung: **27.12.2017**
(21) Anmeldenummer: 15707573.0
(22) Anmeldetag: 19.02.2015
(51) Int. Cl.: F02M 26/54, F02D 9/06, F02D 9/10, F16K 1/22, F16K 1/226

(54) **KLAPPENVORRICHTUNG FÜR EINE VERBRENNUNGSKRAFTMASCHINE**
FLAP DEVICE FOR AN INTERNAL COMBUSTION ENGINE
DISPOSITIF A VOLET POUR MOTEUR A COMBUSTION INTERNE

(30) Priorität: 01.04.2014 DE 102014104579
(43) Veröffentlichungstag der Anmeldung: 08.02.2017
(73) Patentinhaber: Pierburg GmbH, 41460 Neuss (DE)
(72) Erfinder: GERARDS, Hans, 52538 Gangelt (DE); GRAUTEN, Andreas, 47802 Krefeld (DE); MICHELS, Jürgen, 41238 Mönchengladbach (DE); HOLLER, Tim, 47918 Tönisvorst (DE); KLASS, Kirill, 45239 Essen (DE)
(74) Vertreter: Patentanwälte ter Smitten Eberlein-Van Hoof Rütten Partnerschaftsgesellschaft mbB
(86) Internationale Anmeldenummer: PCT/EP2015/053472
(87) Internationale Veröffentlichungsnummer: WO 2015/149989

(56) Entgegenhaltungen:
- WO-A1-2006/003017
- DE-A1-102010 006 023
- JP-A- 2012 057 547

## Beschreibung

Die Erfindung betrifft eine Klappenvorrichtung für eine Verbrennungskraftmaschine mit einem Strömungsgehäuse, das einen Strömungskanal begrenzt, einem Klappenkörper, der drehbar im Strömungskanal angeordnet ist, einer einseitig gelagerten Welle, auf der der Klappenkörper befestigt ist, einem ersten Lager, das in einer ersten Lageraufnahme angeordnet ist und die Welle radial umgibt, einem Aktor, über den die Welle und der Klappenkörper im Strömungskanal drehbar sind, einem Aktorgehäuse, in dem der Aktor angeordnet ist und einer Bohrung, die von einem die Welle umgebenden Raum in den Strömungskanal mündet.

Derartige Klappenvorrichtungen werden beispielsweise als Abgasstauklappen oder Abgasrückführventile in Niederdruck- oder Hochdruckabgaskreisläufen oder als Drosselklappen im Ansaugtrakt von Verbrennungsmotoren eingesetzt und dienen zur Regelung einer zu den Zylindern zurückzuführenden Abgasmenge oder zur Regelung des Drucks im Abgasrückführkanal zur Verringerung des Schadstoffemissionen des Motors oder zur Regelung der angesaugten Luftmenge.

Je nach Einbauort sind diese Ventile sowohl bezüglich der anfallenden Schadstoffmenge als auch bezüglich der herrschenden Temperaturen unterschiedlich stark belastet. Insbesondere bei Ventilen, welche im Abgasbereich angeordnet sind, entstehen einerseits hohe thermische Belastungen der Aktoren und der Lager und andererseits durch im Abgas vorhandene Verunreinigungen die Gefahr eines Klemmens oder einer Schädigung der Lager.

Um solche Schäden durch Ablagerungen auf der Welle zu vermeiden, wird in der EP 1 426 589 A2 eine einseitig gelagerte Klappenvorrichtung vorgeschlagen, bei der im Gehäuse in Strömungsrichtung vor dem Lager ein Raum ausgebildet ist, der über eine Bohrung mit dem Strömungskanal an der stromabwärtigen Seite der Klappe verbunden ist. In dieser Ausführung wird jedoch das Lager nicht vor Eisbildung im abgestellten Zustand des Verbrennungsmotors geschützt.

Des Weiteren ist aus der EP 2 372 136 A2 eine zweiseitig gelagerte Abgasklappe bekannt, deren vom Aktor abgewandte Seite in einer geschlossenen Kunststoffbuchse gelagert ist, in der eine Ausnehmung ausgebildet ist, die über eine Bohrung im Strömungsgehäuse mit dem Strömungskanal verbunden ist, um die Welle gegen Eisbildung oder sonstige Ablagerungen zu schützen. Eine solche Ausführung eignet sich jedoch aufgrund der Ausnehmung im Lager selbst nicht für thermisch hoch belastbare Kohle-Graphitlager. An der entgegengesetzten, dem Aktor zugewandten Seite ist eine solche Ausführung nicht vorgesehen, da dies zu einer thermischen Überlastung des Aktors führen würde.

Entsprechend bestehen bei den bekannten Ausführungen die Nachteile, dass ein sicherer Schutz gegen Schäden durch Eisbildung bei gleichzeitgier thermischer Belastbarkeit für eine Klappenvorrichtung mit in das Aktorgehäuse ragender Welle nicht gegeben ist.

Es stellt sich daher die Aufgabe, eine Klappenvorrichtung für eine Verbrennungskraftmaschine zur Verfügung zu stellen, bei der eine Funktionssicherheit sowohl bei hoher thermischer Belastung als auch bei Temperaturen der Umgebung unter dem Gefrierpunkt gegeben ist. Insbesondere soll der Aktor vor Überhitzung durch eindringendes Abgas geschützt werden und Schäden an den Lagern durch Eisbildung im abgestellten Zustand des Verbrennungsmotors vermieden werden.

Diese Aufgabe wird durch eine Klappenvorrichtung mit den Merkmalen des Hauptanspruchs 1 gelöst.

Dadurch, dass die Welle in das Aktorgehäuse ragt und über das erste Lager und ein zweites Lager einseitig gelagert ist, wobei die erste Lageraufnahme am Strömungsgehäuse ausgebildet ist und der Raum, von dem aus die Bohrung in den Strömungskanal mündet, zwischen dem ersten und dem zweiten Lager angeordnet ist, kann Kondensat, welches entlang der Welle auf die Rückseite des ersten Lagers gelangt, zuverlässig zurück in den Strömungskanal geführt werden. So wird ein Festfrieren der Welle nach dem Abstellen des Motors zuverlässig verhindert, so dass Schäden am Lager, welches üblicherweise als Kohle-Graphitlager ausgeführt ist, verhindert werden. Durch den Raum wird ein Eindringen weiter in den Aktor beziehungsweise zum zweiten Lager ebenfalls verhindert, da ein Druckgefälle zwischen dem Innern des Aktors und dem Raum vermieden wird. Bei angestelltem Verbrennungsmotor werden in den Raum eindringende heiße Abgase in den Strömungskanal zurückgeführt.

Vorzugsweise ist die Bohrung in der ersten Lageraufnahme ausgebildet, welche am Strömungsgehäuse ausgebildet ist, so dass das Lager selbst nicht bearbeitet werden muss und als vollständiger Hohlzylinder ausgeführt werden kann. Alternativ ist die Bohrung im ersten Lager ausgebildet. Eine entsprechende Abflachung an einer Kohlebuchse kann direkt im Pressling eingebracht werden.

In einer vorteilhaften Ausführung ist am axialen Ende des ersten Lagers an der zum Strömungskanal entgegengesetzten Seite der Lageraufnahme eine absatzförmige Erweiterung ausgebildet und erstreckt die Bohrung sich parallel zur Welle von der absatzförmigen Erweiterung aus in den Strömungskanal. Entsprechend kann die Bohrung als einfache Längsbohrung ausgeführt werden. Die Anordnung des Absatzes am Ende des ersten Lagers stellt gleichzeitig sicher, dass sich keine Flüssigkeit innerhalb der Lageraufnahme befindet, die axial am Lager anliegt.

Besonders vorteilhaft ist es, wenn die Bohrung im eingebauten Zustand der Klappenvorrichtung im geodätisch unten liegenden Bereich der Lageraufnahme ausgebildet ist. Dies bedeutet, dass aufgrund der Schwerkraft vorhandene Flüssigkeiten auch in geringen Mengen immer zur Bohrung gelangen, da diese am tiefsten Punkt der Lageraufnahme ausgebildet ist.

Des Weiteren ist die Bohrung in der den Strömungskanal verschließenden Stellung des Klappenkörpers vorzugsweise an der stromabwärtigen Seite des Klappenkörpers angeordnet. Bei angestelltem Klappenkörper im Strömungskanal entsteht durch diese Anordnung eine Druckdifferenz zwischen dem Raum zwischen den beiden Lagern und dem Ende der Bohrung im Strömungskanal. So wird sichergestellt, dass bei Teillast in den Bereich des Lagers eintretende Flüssigkeiten vollständig wieder über die Bohrung abgeführt werden. Auch eindringende heiße Gase werden über die Bohrung abgesaugt, wodurch die thermische Belastbarkeit des Aktors erhöht wird.

Vorzugsweise ist das zweite Lager beabstandet zum ersten Lager in einer Lageraufnahme des Aktorgehäuses angeordnet. So wird eine zuverlässige leicht drehbare Lagerung der Welle sichergestellt. Der Raum zur Aufnahme des Kondenswassers bildet sich somit zwischen den beiden Gehäusen, wodurch die Herstellung der Bohrung deutlich vereinfacht wird.

In einer besonders bevorzugten Ausführungsform verläuft der Strömungskanal waagerecht und die Bohrung ist in einer Ebene angeordnet, die durch einen Vektor, der senkrecht zur Mittelachse des Strömungskanals und einen Vektor, der entlang der Wellenachse verläuft, aufgespannt ist. Auf diese Weise kann die Bohrung auch bei waagerecht verlaufendem Strömungskanal an der tiefsten Stelle angeordnet werden, wodurch der Ablauft des Wassers und von Verunreinigungen sichergestellt wird.

In einer hierzu weiterführenden Ausgestaltung ist der Klappenkörper derart sphärisch geformt, dass die Bohrung in allen Positionen des Klappenkörpers frei durchströmbar ist und im geschlossenen Zustand an deren stromabwärtigen Seite angeordnet ist. Die freie Durchströmbarkeit der Bohrung ermöglicht bei Teillast die Nutzung der Druckdifferenz an der Rückseite des geschlossenen Klappenkörpers im Vergleich zum Raum zwischen den beiden Lagern, während bei Volllast aufgrund nicht vorhandener Druckdifferenzen nicht mit einem Eindringen von Flüssigkeiten oder heißen blow-by Gasen in den Raum zu rechnen ist.

Es wird somit eine Klappenvorrichtung für eine Verbrennungskraftmaschine geschaffen, mit der ein zuverlässiger Ablauf von Flüssigkeiten, die entlang der Welle hinter das erste Lager gelangen, in den Strömungskanal sichergestellt wird. Dies erhöht die Lebensdauer der Lager und verhindert ein Einfrieren und somit Steckenbleiben der Welle. Gleichzeitig werden auch thermische Vorteile erzielt, da heiße Abgase zurück in den Kanal und nicht in Richtung des Aktors geleitet werden.

Ein Ausführungsbeispiel einer erfindungsgemäßen Klappenvorrichtung ist in den Figuren dargestellt und wird nachfolgend beschrieben.
Figur 1 zeigt eine Seitenansicht einer erfindungsgemäßen Klappenvorrichtung in geschnittener Darstellung.
Figur 2 zeigt eine perspektivische Ansicht eines Strömungskanals der Klappenvorrichtung gemäß der Figur 1, der in Höhe der Welle geschnitten dargestellt ist.
Die erfindungsgemäße Klappenvorrichtung weist ein Strömungsgehäuse 10 auf, welches einen Strömungskanal 12 begrenzt. Im Strömungskanal 12 ist ein Klappenkörper 14 angeordnet, über den der Durchströmungsquerschnitt des Strömungskanals 12 geregelt werden kann, indem der Klappenkörper 14 im Strömungskanal 12 gedreht wird.

Hierzu ist der Klappenkörper 14 auf einer Welle 16 befestigt, die durch das Strömungsgehäuse 10 in den Strömungskanal 12 ragt. Am zum Klappenkörper 14 gegenüberliegenden Ende ist auf der Welle 16 ein Abtriebszahnrad 18 befestigt, welches Teil eines als Stirnradgetriebe ausgebildeten Getriebes 20 ist. Dieses Getriebe 20 wird über einen Elektromotor 22 bei entsprechender Bestromung des Elektromotors 22 angetrieben. Hierzu ist auf einer Ausgangswelle 24 des Elektromotors 22 ein Antriebsritzel 26 befestigt, welches als Antriebsglied des Getriebes 20 wirkt, so dass die Drehbewegung des Elektromotors 22 untersetzt über das Getriebe 20 auf die Welle 16 und damit auf den Klappenkörper 14 übertragen wird.

Der Elektromotor 22 und das Getriebe 20 dienen somit als Aktor 28 der Klappenvorrichtung und sind in einem gemeinsamen Aktorgehäuse 30 angeordnet, welches aus einem Hauptgehäuseteil 32, in dem der Elektromotor 22 sowie das Getriebe 20 montiert sind und einem einen Aktorinnenraum 34 verschließenden Deckel 36 besteht, der unter Zwischenlage einer Dichtung 38 am Hauptgehäuseteil 32 befestigt ist. Um den verwendeten Bauraum möglichst gering zu halten und den Elektromotor sowie das Getriebe 20 im Hauptgehäuseteil 32 einfach montieren zu können, ragt der parallel zur Welle 16 angeordnete Elektromotor 22 parallel zur Welle 16 in Richtung des Strömungsgehäuses 10.

Am Strömungsgehäuse 10 ist eine Lageraufnahme 40 in Form eines hohlzylindrischen Vorsprungs 42 ausgebildet, der sich in Richtung eines hohlzylindrischen Aufnahmeelementes 44 am Aktorgehäuse 30 erstreckt. Das Innere dieses hohlzylindrischen Aufnahmeelementes 44 bildet eine radial begrenzte Aufnahmeöffnung 46, in die der hohlzylindrische Vorsprung 42 des Strömungsgehäuses 10 ragt, wobei der Innendurchmesser der Aufnahmeöffnung 46 im Wesentlichen dem Außendurchmesser des Aufnahmeelementes 44 entspricht. Bei der Montage wird das axiale Ende des hohlzylindrischen Vorsprungs 42 gegen ein absatzförmige Ende 48 der Aufnahmeöffnung 46 unter Zwischenlage einer Axialdichtung 50 geschoben.

An das Aufnahmeelement 44 schließt sich in den Aktorinnenraum 34 ragend ein hohlzylindrischer Vorsprung 52 verkleinerten Durchmessers an, so dass zwischen dem sich axial erstreckenden Aufnahmeelement 44 und dem sich axial erstreckenden hohlzylindrischen Vorsprung 52 ein weiterer Absatz 54 ausgebildet ist. Der zweite hohlzylindrische Vorsprung 52 des Aktorgehäuses 30 dient als zweite Lageraufnahme 56.

In der ersten Lageraufnahme 40 des Strömungsgehäuses 10 ist ein als Gleitlager ausgeführtes erstes Lager 58 für die Welle 16 angeordnet, welches aus Kohle-Graphit hergestellt ist und axial gegen eine die Wellendurchführungsöffnung radial begrenzende Wand 57 anliegt. Die Welle 16 erstreckt sich durch das erste Lager 58 und über den in den Aktorinnenraum 34 ragenden Vorsprung 52 hinaus in den Aktorinnenraum 34. Die zweite Lageraufnahme 56 weist eine Querschnittsverengung auf, an deren entgegengesetzten Enden jeweils ein Absatz 60, 62 gebildet wird. Die Vorsprünge 42, 52, das Aufnahmeelement 44 sowie die Lager weisen eine gemeinsame Mittelachse 63 auf, die gleichzeitig die Wellenachse ist.

Radial innerhalb dieses verengten Querschnitts ist ein zweites Lager 64 angeordnet, welches ebenfalls als Kohle-Graphit-Gleitlager ausgeführt ist, so dass die Welle 16 zweifach an einer Klappenseite gelagert ist. Das zum Klappenkörper 14 weisende axiale Ende dieses Lagers 64 ragt geringfügig über den Absatz 54 hinaus. Auf diese Weise wird es möglich, dass eine fest auf der Welle 16 angeordnete Anlaufscheibe 66 über eine Dreh- und Druckfeder 68 zur axialen Lagefixierung der Welle 16 gegen das zweite Lager 64 gedrückt wird.

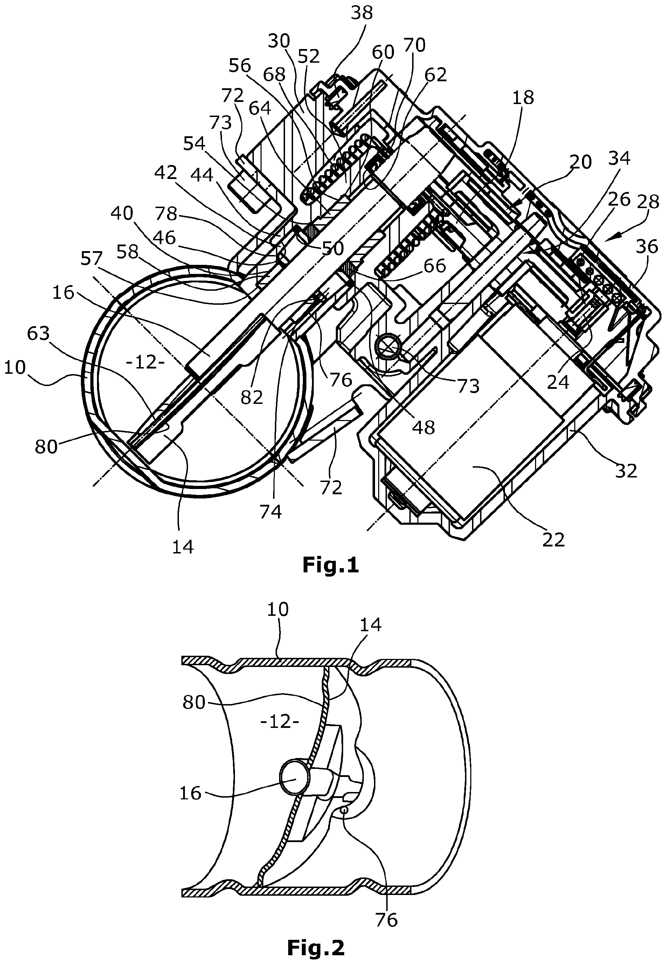

Diese Dreh-Druckfeder 68 ist im Aktorinnenraum 34, den Vorsprung 52 radial umgebend angeordnet und drückt gegen das fest auf der Welle 16 angeordnete Abtriebszahnrad 18, so dass mit diesem auch die Welle 16 in dieser axialen Richtung belastet wird. Des Weiteren greifen die beiden Endschenkel der Feder 68 in bekannter Weise derart hinter in der Figur 1 nicht erkennbare Vorsprünge am Aktorgehäuse 30 und am Abtriebszahnrad 18, dass die Welle 16 in eine Richtung zumindest bei Drehung aus der Ruhestellung vorgespannt ist. Entsprechend wird die Welle 16 aufgrund der Federkraft bei Ausfall des Elektromotors 22 in eine Notlaufposition gedreht.

Am in den Aktorinnenraum weisenden Ende des Vorsprungs 52 ist die Welle 16 umgebend ein Dichtring 70 angeordnet, der axial gegen den Absatz 62 anliegt und die Wellendurchführung durch die Lageraufnahme 56 in Richtung des Aktorinnenraums 34 abdichtet.

Die Befestigung des Strömungsgehäuses am Aktorgehäuse 30 erfolgt über Verbindungsplatten 72, die beispielsweise durch Schweißen am Strömungsgehäuse 10 befestigt sind und an denen über Schrauben 73 das Aktorgehäuse 30 befestigt ist.

Im Betrieb, also bei laufendem Verbrennungsmotor, wird der Strömungskanal 10 von Abgas durchströmt. Dieses Abgas beinhaltet Wasser und andere Verunreinigungen. Beides dringt durch die Pulsationen im Abgasstrang entlang der Welle 16 in einen Raum 74 zwischen den beiden Lagern 58, 64 und kann dort insbesondere nach dem Abschalten des Verbrennungsmotors kondensieren. Bei Temperaturen unter 0°C führt dies zu einer Eisbildung im Bereich des Lagers 58, was wiederum zu Schäden am Lager 58 oder einem Steckenbleiben der Welle 16 führen kann.

Um dies zu vermeiden, ist am hohlzylindrischen Vorsprung 42 eine Bohrung 76 ausgebildet, die sich vom Raum 74 in den Strömungskanal 12 erstreckt und parallel zur Welle 16 verläuft. Um diese Bohrung 76 besonders einfach herstellen zu können, erweitert sich die Lageraufnahme 40 in Form einer absatzförmigen Erweiterung 78 in Richtung des Aktorgehäuses 30. Diese absatzförmige Erweiterung 78 ist in Höhe eines axialen Endes 82 des ersten Lagers 58 ausgebildet, so dass sich kein Wasser innerhalb des Vorsprungs 42 auf dem Lager 58 befinden kann, wenn der Einbau der Klappenvorrichtung im Abgasstrang der Verbrennungskraftmaschine so erfolgt, dass der Anfang dieser Bohrung 76 an der geodätisch niedrigsten Position des Raumes 74 angeordnet ist und die Bohrung 76 in Richtung zum Strömungskanal 12 stetig abfällt, so dass Kondenswasser aus dem Raum 74 aufgrund der Gravitation immer in Richtung der Bohrung 76 und durch diese hindurch in Richtung des Strömungskanals 12 strömt. Um zusätzlich ein Strömen in dieser Richtung auch bei warmem Verbrennungsmotor, also während des Betriebes, sicher zu stellen, befindet sich die Bohrung 76 an der stromabwärtigen Seite des Klappenkörpers 14 im geschlossenen Zustand des Klappenkörpers 14, da an dieser Seite im Betrieb bei Teillast, also geschlossenem Klappenkörper 14 ein Unterdruck entsteht, der eine Saugwirkung gegenüber dem Raum 74 erzeugt.

Da gleichzeitig der Einbau dieser Klappenvorrichtung zumeist an einem waagerechten Strömungskanal 12 stattfindet, sind diese beiden Bedingungen dadurch zu erreichen, dass die Bohrung 76 in einer Ebene angeordnet ist, die durch einen Vektor, der senkrecht zur Mittelachse des Strömungskanals 12 und einen Vektor, der entlang der Wellenachse verläuft, aufgespannt ist. Zusätzlich ist der Klappenkörper 14 in der Weise sphärisch geformt, dass er eine Wölbung 80 aufweist, die derart angeordnet ist, dass der Außenumfang des Klappenkörpers 14 zur stromaufwärtigen Seite geneigt ist.

Bei Volllast befindet sich der Klappenkörper 14 in seiner den Strömungskanal 12 öffnenden Stellung, in der jedoch lediglich geringe Druckdifferenzen auftreten, so dass der Eintrag an Abgas entlang der Welle 16 in den Raum 74 lediglich gering ist und hohe Abgastemperaturen vorliegen, die ein Kondensieren des Wassers im Abgas verhindern.

Durch den Raum 74 zwischen den beiden Lagern 58, 64 werden Druckdifferenzen, die dazu führen, dass Abgas entlang der Welle 16 bis an das Innere des Aktors 28 strömt, vermieden, da ein Druckabbau über den Raum 74 stattfindet.

Es wird somit eine Klappenvorrichtung geschaffen, bei der Schäden des Aktors oder ein Steckenbleiben der Welle durch gefrierendes Wasser oder andere Verunreinigungen vermieden werden. Gleichzeitig wird im Betrieb des Verbrennungsmotors dem Raum zwischen den Lagern Wärme entzogen, da das Abgas aus dem Raum in Richtung des Strömungskanals gesaugt wird. Trotz der direkten Anbindung der Klappenwelle in den Aktorinnenraum wird der Aktor nicht thermisch überlastet, da kein heißes Abgas aufgrund von Druckdifferenzen in das Innere des Aktors eindringt.

Es sollte deutlich sein, dass der Schutzbereich des vorliegenden Hauptanspruchs nicht auf das beschriebene Ausführungsbeispiel begrenzt ist. Insbesondere können die konstruktive Ausgestaltung der Gehäuse, die verwendeten Antriebe oder Getriebe sowie die Kanal und Klappenformen abgeändert werden. Auch können unterschiedliche Lager und Dichtungen verwendet werden. Auch kann die Bohrung je nach Ausführung des Lagers am Lager selbst ausgebildet werden.

## Patentansprüche

1. Klappenvorrichtung für eine Verbrennungskraftmaschine mit
einem Strömungsgehäuse (10), das einen Strömungskanal (12) begrenzt,
einem Klappenkörper (14), der drehbar im Strömungskanal (12) angeordnet ist,
einer einseitig gelagerten Welle (16), auf der der Klappenkörper (14) befestigt ist,
einem ersten Lager (58), das in einer ersten Lageraufnahme (40) angeordnet ist und die Welle (16) radial umgibt,
einem Aktor (28), über den die Welle (16) und der Klappenkörper (14) im Strömungskanal (12) drehbar sind,
einem Aktorgehäuse (30), in dem der Aktor (28) angeordnet ist und einer Bohrung (76), die von einem die Welle (16) umgebenden Raum (74) in den Strömungskanal (12) mündet,
**dadurch gekennzeichnet, dass**
die Welle (16) in das Aktorgehäuse (30) ragt und über das erste Lager (58) und ein zweites Lager (64) einseitig gelagert ist,
wobei die erste Lageraufnahme (40) am Strömungsgehäuse (10) ausgebildet ist und der Raum (74), von dem aus die Bohrung (76) in den Strömungskanal (12) mündet, zwischen dem ersten Lager (58) und dem zweiten Lager (64) angeordnet ist.

2. Klappenvorrichtung für eine Verbrennungskraftmaschine nach Anspruch 1,
**dadurch gekennzeichnet, dass**
die Bohrung (76) in der ersten Lageraufnahme (40) ausgebildet ist, welche am Strömungsgehäuse (10) ausgebildet ist.

3. Klappenvorrichtung für eine Verbrennungskraftmaschine nach Anspruch 1,
**dadurch gekennzeichnet, dass**
die Bohrung (76) im ersten Lager (58) ausgebildet ist.

4. Klappenvorrichtung für eine Verbrennungskraftmaschine nach Anspruch 2,
**dadurch gekennzeichnet, dass**
am axialen Ende (82) des ersten Lagers (58) an der zum Strömungskanal (12) entgegengesetzten Seite der Lageraufnahme (58) eine absatzförmige Erweiterung (78) ausgebildet ist und die Bohrung (76) sich parallel zur Welle (16) von der absatzförmigen Erweiterung (78) aus in den Strömungskanal (12) erstreckt.

5. Klappenvorrichtung für eine Verbrennungskraftmaschine nach einem
der Ansprüche 2 bis 4,
**dadurch gekennzeichnet, dass**
die Bohrung (76) im eingebauten Zustand der Klappenvorrichtung im geodätisch unten liegenden Bereich der ersten Lageraufnahme (40) oder des ersten Lagers (58) ausgebildet ist.

6. Klappenvorrichtung für eine Verbrennungskraftmaschine nach einem
der vorhergehenden Ansprüche,
**dadurch gekennzeichnet, dass**
die Bohrung (76) in der den Strömungskanal (12) verschließenden Stellung des Klappenkörpers (14) an der stromabwärtigen Seite des Klappenkörpers (14) angeordnet ist.

7. Klappenvorrichtung für eine Verbrennungskraftmaschine nach einem
der vorhergehenden Ansprüche,
**dadurch gekennzeichnet, dass**
das zweite Lager (64) beabstandet zum ersten Lager (58) in einer Lageraufnahme (56) des Aktorgehäuses (30) angeordnet ist.

8. Klappenvorrichtung für eine Verbrennungskraftmaschine nach einem
der vorhergehenden Ansprüche,
**dadurch gekennzeichnet, dass**
der Strömungskanal (12) waagerecht verläuft und die Bohrung (76) in einer Ebene angeordnet ist, die durch einen Vektor, der senkrecht zur Mittelachse des Strömungskanals (12) und einen Vektor, der entlang der Wellenachse verläuft, aufgespannt ist.

9. Klappenvorrichtung für eine Verbrennungskraftmaschine nach einem der vorhergehenden Ansprüche,
**dadurch gekennzeichnet, dass**
der Klappenkörper (14) derart sphärisch geformt ist, dass die Bohrung (76) in allen Positionen des Klappenkörpers (14) frei durchströmbar ist und im geschlossenen Zustand an deren stromabwärtigen Seite angeordnet ist.

## Claims

1. A flap device for an internal combustion engine, the flap device comprising:
a flow housing (10) configured to delimit a flow duct (12),
a flap body (14) rotatably attached in the flow duct (12),
a shaft (16) supported on one side thereof, the flap body (14) being mounted thereon,
an actuator (28) configured to rotate the shaft (16) and the flap body (14) in the flow duct (12),
an actuator housing (30) in which the actuator (28) is arranged,
a bore (76) arranged to open into the flow duct (12) from a chamber (74) surrounding the shaft (16),
**characterized in that**
the shaft (16) is configured to protrude into the actuator housing (30) and is supported on the one side via the first bearing (58) and via second bearing (64), and
wherein the first bearing seat (40) is formed on the flow housing (10) and the chamber (74) from which the bore (76) opens into the flow duct (12) is arranged between the first bearing (58) and the second bearing (64).

2. The flap device for an internal combustion engine as recited in claim 1, **characterized in that** the bore (76) is formed in the first bearing seat (40) which is formed on the flow housing (10).

3. The flap device for an internal combustion engine as recited in claim 1, **characterized in that** the bore (76) is formed in the first bearing (58).

4. The flap device for an internal combustion engine as recited in claim 2, **characterized in that** the first bearing (58) comprises a step-shaped widened portion (78) on an axial end (82) thereof, the step-shaped widened portion being formed on a side of the first bearing seat (58) which is opposite to the flow duct, and the bore (76) extends parallel to the shaft (16) from the step-shaped widened portion (78) into the flow duct (12).

5. The flap device for an internal combustion engine as recited in one of claims 2 to 4, **characterized in that**, in an assembled state of the flap device, the bore (76) is formed in a geodetically lower region of the first bearing seat (40) or in a geodetically lower region of the first bearing (16).

6. The flap device for an internal combustion engine as recited in one of the preceding claims, **characterized in that** the bore (76) is arranged on a downstream side of the flap body (14) when the flap body (14) is arranged to close the flow duct (12).

7. The flap device for an internal combustion engine as recited in one of the preceding claims, **characterized in that** the second bearing (64) is arranged at a distance from the first bearing (58) in a bearing seat (58) of the actuator housing (30).

8. The flap device for an internal combustion engine as recited in one of the preceding claims, **characterized in that** the flow duct (12) is configured to extend horizontally, and the bore (76) is arranged in a plane which is spanned by a vector extending vertically to the central axis of the flow duct (12) and by a vector extending along the shaft axis.

9. The flap device for an internal combustion engine as recited in one of the preceding claims, **characterized in that** the flap body (14) is formed spherically so that the bore (76) allows for a free flow therethrough in all positions of the flap body (14), and, in a closed state, the bore is arranged on a downstream side of the flap body.

## Revendications

1. Dispositif à volet pour moteur à combustion interne, avec
un boitier d'écoulement (10) délimitant un conduit d'écoulement (12),
un corps de volet (14) disposé dans le conduit d'écoulement (12) de façon rotative,
un arbre (16) supporté d'un côté, sur lequel le corps de volet (14) est monté,
un premier palier (58) agencé dans un premier logement de palier (40) et radialement entourant l'arbre (16),
un actionneur (28) par lequel l'arbre (16) et le corps de volet (14) peuvent être tourné dans le conduit d'écoulement (12),
un boitier d'actionneur (30) dans lequel ledit actionneur (28) est agencé, et
un alésage (76) s'ouvrant dans le conduit d'écoulement (12) à partir d'une chambre (74) entourant ledit arbre (16),
**caractérisé en ce que**
ledit arbre (16) saille dans ledit boitier d'actionneur (30) et est supporté d'un côté par ledit premier palier (58) et un deuxième palier (64),
ledit premier logement de palier (40) étant formé sur ledit boitier d'écoulement (10) et la chambre (74), à partir de laquelle l'alésage (76) s'ouvre dans le conduit d'écoulement (12), étant agencée entre le premier palier (59) et le deuxième palier (64).

2. Dispositif à volet pour moteur à combustion interne selon la revendication 1, **caractérisé en ce que** l'alésage (76) est formé dans ledit premier logement de palier (40) qui est formé sur ledit boitier d'écoulement (10).

3. Dispositif à volet pour moteur à combustion interne selon la revendication 1, **caractérisé en ce que** l'alésage (76) est formé dans ledit palier (58).

4. Dispositif à volet pour moteur à combustion interne selon la revendication 2, **caractérisé en ce qu'**un élargissement (78) en forme d'épaulement est formé à l'extrémité axiale (82) du premier palier (58) sur le côté du logement de palier (58), opposé au conduit d'écoulement (12), et **en ce que** l'alésage (76) s'étend parallèlement à l'arbre (16) à partir dudit élargissement (78) en forme d'épaulement dans ledit conduit d'écoulement (12).

5. Dispositif à volet pour moteur à combustion interne selon l'une quelconque des revendications 2 à 4, **caractérisé en ce qu'**à l'état monté du dispositif à volet, l'alésage (76) est formé dans la région géodésiquement basse du logement de palier (58) ou du premier palier (58).

6. Dispositif à volet pour moteur à combustion interne selon l'une quelconque des revendications précédentes, **caractérisé en ce que**, lors ledit corps de volet (14) se trouve dans sa position fermant ledit conduit d'écoulement (12), l'alésage est disposé sur le côté aval du corps de clapet (14).

7. Dispositif à volet pour moteur à combustion interne selon l'une quelconque des revendications précédentes, **caractérisé en ce que** le deuxième palier (64) est disposé, éloigné du premier palier (58), dans un logement de palier (56) du boitier d'actionneur (30).

8. Dispositif à volet pour moteur à combustion interne selon l'une quelconque des revendications précédentes, **caractérisé en ce que** ledit conduit d'écoulement (12) est horizontal et l'alésage (76) est disposé dans un plan défini par un vecteur vertical par rapport à l'axe central du conduit d'écoulement (12) et un vecteur s'étendant le long de l'axe de l'arbre.

9. Dispositif à volet pour moteur à combustion interne selon l'une quelconque des revendications précédentes, **caractérisé en ce que** ledit corps de volet (14) est formé sphérique de sorte que l'alésage (76) peut être passé librement dans toutes les positions du corps de volet (14) et, dans la position fermée du corps de volet, l'alésage est disposé au côté aval du corps de volet.
